# EUROPEAN PATENT APPLICATION

(11) **EP 3 028 601 A1**
(43) Date of publication of application: **08.06.2016**
(21) Application number: 14197024.4
(22) Date of filing: 09.12.2014
(51) Int. Cl.: A46B 15/00, A46B 17/04, A61C 15/04

(54) **Constructive disposition applied to toothbrush conjugated to dental floss**

(30) Priority: 02.12.2014 BR 202014030163 U
(71) Applicant: Rocha Silva, Romulo, Porto Velho - Rondonia (BR)
(72) Inventor: Rocha Silva, Romulo, Porto Velho - Rondonia (BR)
(74) Representative: Sarpi, Maurizio

(57) **Abstract**

Constructive disposition applied to toothbrush conjugated to dental floss comprising a main body formed by brushing rod and cable cover, being said brushing rod provided on its upper end with a toothbrush head provided with several bristles, positioned on a base below which there is a support followed by a strap handle, this handle being provided internally with a cavity housing a coil that lodges a dental floss roll, having its filament inserted into a channel provided with a cutting blade, wherein said handle strap in the lower section projects an articulated cover, with cable cover in its upper section provided with vent holes.

## Description

001 The present invention refers to the constructive disposition applied to toothbrush conjugated to dental floss, which was developed in order to facilitate the oral hygiene of the users in a practical, comfortable and hygienic way, through a multifunctional toothbrush, provided with compartment to floss packaging, this arranged in the form of refills, which enables a complete dental cleaning by brushing and the application of dental floss, thus facilitating the user routine, who spends most of the day in work situations or outside, promoting an optimization of objects in the act of cleaning and consequently reducing the volume of discarded materials, dealing with a evolutionary nature solution whose practical obtained result reports for a differentiated and effective condition of use, for better convenience of users.

### Technical State

002 Throughout history, human beings have always made use of creativity to remove bits of food between teeth.

003 The first toothbrush was used in China in 1498, and was made with pig hair. Later, the pig hair was eventually replaced by horse hair.

004 The oldest toothbrush of Europe arose 300 years ago, made with bone and was discovered during archaeological excavations in an old municipal hospital in Minden, Germany.

005 In 1938, DuPont developed the nylon bristles, used nowadays.

006 The fall and diseases of the teeth can be caused by bacterial action resulting from plaque formation around the teeth and / or capture of food particles between the teeth and the gaps between them. The removal of plaque and captured food particles reduces the incidence of caries, gingivitis, and mouth odors as well as generally improving the dental hygiene. Conventional brushing has proven to be inadequate to remove all stuck food particles and plaque. To supplement brushing, dental floss and tape has been recommended. The expression "dental floss", as used herein, is defined to include both dental flosses, dental tapes, and all similar products.

007 To improve the efficiency and convenience of dental flosses using.

008 The inventor of dental floss, a product that along with the toothbrush is essential for oral health, was the dentist of New Orleans, Levi Spear Parmly, in 1815. He began to recommend to his patients to use his own dental floss, made of silk.

009 However, Levi Parmly developed dental floss and recommended it only to his patients, at small scales. The wide production of dental floss began with the Codman & Shurtleft company in 1882; and in 1898, Johnson & Johnson started to have the first patent of dental floss.

010 Until then, dental floss was made from silk, unlike the wire we know today. The nylon thread was developed by Charles C. Bass, who improved it, increasing its elasticity and especially its resistance. Dental floss is so important for oral hygiene because there are certain food residue and bacterial plaque between teeth that the brush cannot eliminate, giving to dental floss this function.

011 There are in the market dental flosses made of nylon, waxed or not, with a variety of flavors. Because this type of wire is composed of many nylon fibers, it can sometimes tear or shred, especially if the teeth are too close together. Although more expensive, the only filament wire (PTFE) slides easily between teeth, even with little space, and does not break.

012 If used properly, the two types of wire remove bacterial plaque and food residues. Often, after brushing your teeth, you are still surprised by an unpleasant taste in the mouth. Is that inevitably there are leftover food residue and plaque between teeth that the brush bristles could not reach and eliminate.

013 In addition to this untimely taste, there are some serious additional risks: persistent bad breath, tooth decay and gum disease.

014 This is precisely because it is in the region between the teeth (place of difficult access for cleaning) that there is a strong tendency to caries and gum disease in a more severe form.

015 It is the dental floss that reaches where the toothbrush cannot and remove the last residues of food that stay between the teeth, both in front and in back. It also removes bacterial plaque coming out of the teeth being gripped in dental floss.

016 Finally a good oral hygiene is one of the most important steps you can take to keep your teeth and gums in order. Healthy teeth not only contribute to you to look good, but are also important for you to speak well and properly chew food. Maintaining a healthy mouth is important for the general well-being.

017 Preventive daily care such as proper brushing and proper flossing help to prevent that dental problems become more serious. We must keep in mind that prevention is the most economical way, less painful and less worrisome to take care of oral health and that making prevention we avoid dealing with problems that become severe. There are some very simple steps that each of us can take to greatly decrease the risk of developing caries, gingivitis and other oral problems.

018 Given this situation we must keep in mind that many places where meals are served do not have dental floss for customers or wherever it can be found, it has its supporters set inside the toilet, which enables contamination of all the wires even packaged inside the support, because bacteria disposed in the air penetrates easily through hole through which dental floss is removed.

It is the aim of this application to provide the market with the multifunctional brush, to assist and streamline the oral hygiene, so after long trial period and studies, the inventor has developed the constructive disposition applied to toothbrush conjugated to dental floss comprised of a main body formed by brushing rod and cable cover, and said brushing rod is provided in its upper end with a brushing head with several bristles, positioned on a base below which there is a support followed by a strap handle, this provided internally with a cavity housing a coil that lodges a dental floss roll, whose filament is inserted into the channel provided with cutting blade, wherein said handle strap in the lower section projects an articulated cover, and the cable cover in its upper section is provided with vent holes.

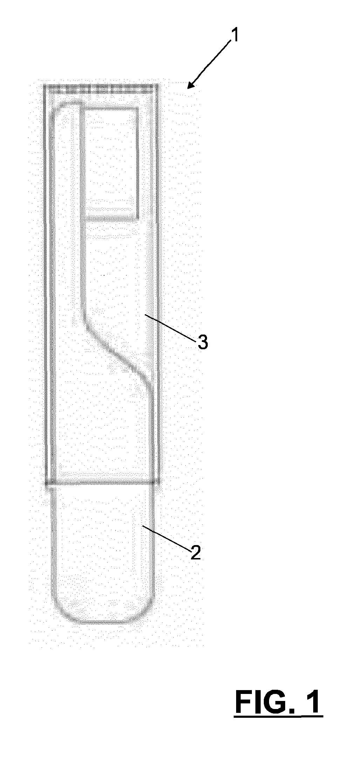

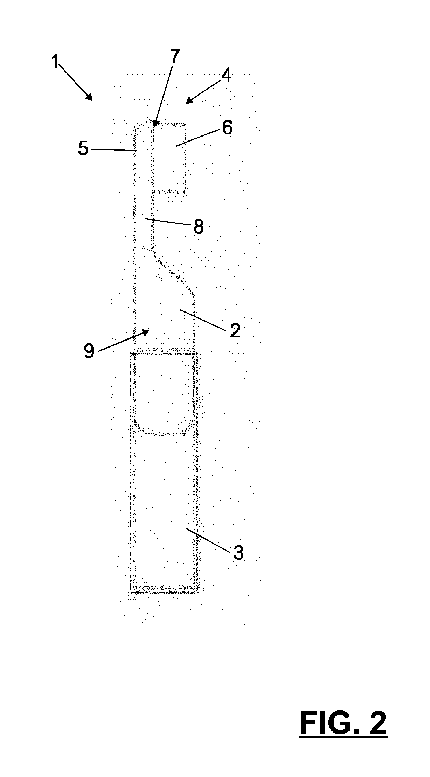

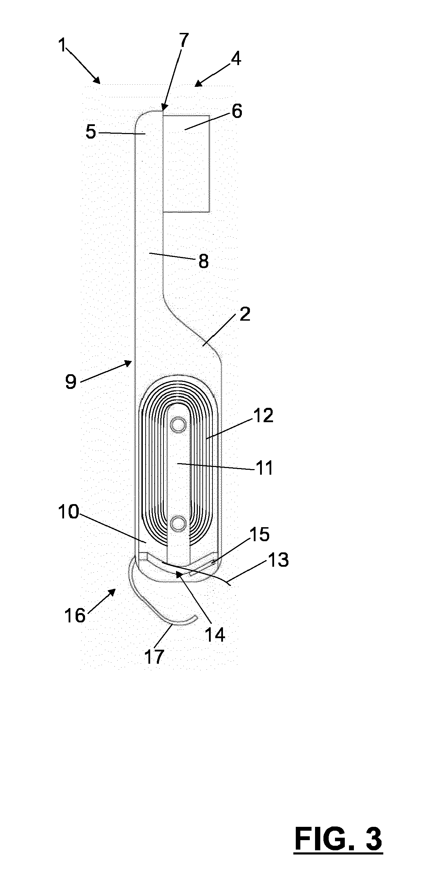

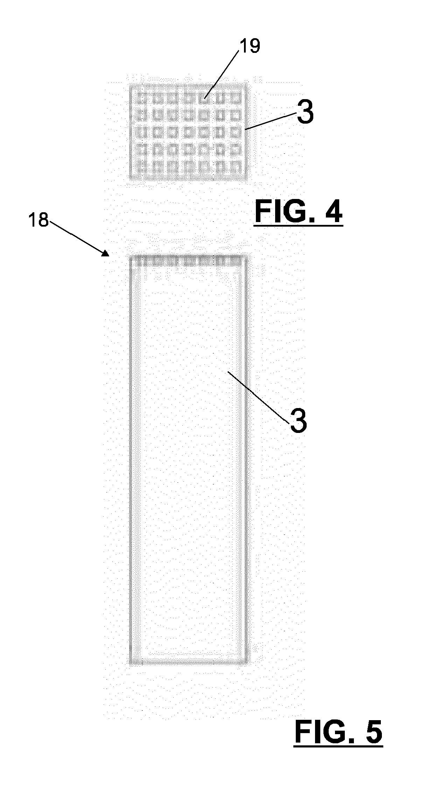

019 In order to obtain a full understanding of what was developed, illustrative drawings are added, which are made numeral reference to in conjunction with a detailed description that follows, where:
020 Figure 1 shows a side view of the brush closed.
021 Figure 2 shows a side view of the brush in position of use for brushing.
022 Figure 3 shows a side view of the brush in position of flossing.
023 Figure 4 shows a top view of the cable cover.
024 Figure 5 shows a side view of the cable cover.

025 As shown in figures and in its details, according to the present invention, a constructive disposition applied to toothbrush conjugated to dental floss comprises a main body (1) formed by brushing rod (2) and cable cover (3), being said brushing rod (2) provided on its upper end (4) with a toothbrush head (5) provided with several bristle (6), positioned on a base (7) below which there is a support (8) followed by a strap handle (9). This strap handle (9) is provided internally with a cavity (10) housing a coil (11) that houses dental floss roll (12), having its filament (13) inserted into a channel (14) provided with a cutting blade (15), wherein said strap handle (9) in the lower section (16) projects an articulated cover (17), with cable cover (3) in its upper section (18) provided with vent holes (19).

026 Given the above description it is possible to understand that said constructive disposition applied to toothbrush conjugated to dental floss brings considerable advantages for users as it provides a complete oral hygiene object according to odontological standards, where it is present a toothbrush and floss which makes it easy cleaning teeth, being the brush bristles protected by the cable cover that is removed for brushing, coupled to the handle strap, so that after brushing it is again positioned so to protect the bristles, and the user opens the articulated lid and removes dental floss to the desired extent that is cut by the blade, besides the fact that the object is compact and easy packaging in bags.

027 For meeting all the requirements that define the invention, as combined and modified known elements, giving them an innovative general appearance and capable of industrialization, modifications can be made without departing from the spirit and scope of the invention, as defined in the following claims.

## Claims

1. Constructive disposition applied to toothbrush conjugated to dental floss **characterized in** the fact that it comprises a main body (1) formed by brushing rod (2) and cable cover (3), being said brushing rod (2) provided on its upper end (4) with a toothbrush head (5) provided with several bristles (6), positioned on a base (7) below which there is a support (8) followed by a strap handle (9), which is provided internally with a cavity (10) housing a coil (11) that lodges dental floss roll (12), having its filament (13) inserted into a channel (14) provided with a cutting blade (15), wherein said handle strap (9) in the lower section (16) projects an articulated cover (17), with cable cover (3) in its upper section (18) provided with vent holes (19).
